# EUROPEAN PATENT APPLICATION

(11) **EP 4 040 354 A1**
(43) Date of publication of application: **10.08.2022**
(21) Application number: 19947954.4
(22) Date of filing: 01.10.2019
(51) Int. Cl.: G06Q 10/06, G06Q 50/08

(54) **WORK MANAGEMENT DEVICE, WORK MANAGEMENT METHOD, AND RECORDING MEDIUM**

(71) Applicant: JGC Corporation, Nishi-ku Yokohama-shi Kanagawa 220-6001 (JP)
(72) Inventor: OOSATO, Erio, Yokohama-shi, Kanagawa 220-6001 (JP); KOJIMA, Kazuyuki, Yokohama-shi, Kanagawa 220-6001 (JP); OHARA, Hiroki, Yokohama-shi, Kanagawa 220-6001 (JP)
(74) Representative: Becker, Eberhard
(86) International application number: PCT/JP2019/038810
(87) International publication number: WO 2021/064877

(57) **Abstract**

This work management device is provided with: a display control unit which causes a display device to display a work permit for a work package that is a unit of work for building a construction object; a registration unit which registers one or more workers for the work package; a first acquisition unit which acquires work time information indicating the work time that was taken to complete the work package; a generation unit which generates work record information including the work time information and identification information about the work package; and an output unit which outputs the work record information.

## Description

### TECHNICAL FIELD

This disclosure relates to a work management device, a work management method, and a recording medium.

### BACKGROUND ART

A plurality of constructions are performed in a project of constructing a construction object. Labor resources, for example, workers, are assigned to each of those constructions. In Patent Literature 1, there is described a project management system configured to assign to a task a type and a volume of a labor resource required to process the task based on an assignment criterion for the labor resource, and change the assignment of the labor resource in accordance with a progress rate of the task.

### [CITATION LIST]

### [PATENT LITERATURE]

[Patent Literature 1] WO 2017/130446 A1

### SUMMARY OF INVENTION

### [TECHNICAL PROBLEM]

Productivity of a construction may change in accordance with a stage of the construction, such as an early stage, a middle stage, and a final stage. Moreover, the productivity of a construction may change in accordance with a construction object. In order to assign the labor resource in consideration of the productivity, which changes in this manner, high accuracy is required for work record information including a duration in which the worker actually conducted the work.

This disclosure describes a work management device, a work management method, and a recording medium, which are capable of increasing the accuracy of the work record information.

### [SOLUTION TO PROBLEM]

A work management device according to one aspect of this disclosure is an apparatus configured to manage a work for performing a project of constructing a construction object. The work management device includes: a display control unit configured to display on a display apparatus a permit to work for a work package, which is a work unit for constructing the construction object; a registration unit configured to register one or more workers in the work package; a first acquisition unit configured to acquire work duration information indicating a work duration that has been required to complete the work package; a generation unit configured to generate work record information including identification information on the work package and the work duration information; and an output unit configured to output the work record information.

A work management method according to another aspect of this disclosure is a method of managing a work for performing a project of constructing a construction object. The work management method includes: displaying on a display apparatus a permit to work for a work package, which is a work unit for constructing the construction object; registering one or more workers in the work package; acquiring work duration information indicating a work duration that has been required to complete the work package; generating work record information including identification information on the work package and the work duration information; and outputting the work record information.

A recording medium according to still another aspect of this disclosure is a computer-readable recording medium having recorded thereon a work management program for causing a computer to operate to manage a work for performing a project of constructing a construction object. The work management program is a program for causing a computer to execute the procedures of: displaying on a display apparatus a permit to work for a work package, which is a work unit for constructing the construction object; registering one or more workers in the work package; acquiring work duration information indicating a work duration that has been required to complete the work package; generating work record information including identification information on the work package and the work duration information; and outputting the work record information.

In the work management device, the work management method, and the recording medium, the permit to work for the work package is displayed, and one or more workers are registered in the work package. The permit to work is always required to be checked before the start of the work, and hence the workers can more reliably be registered by performing the work of registering the workers together with the work of checking the permit to work. Further, the work duration information indicating the work duration that has been required to complete the work package is acquired, and the work record information is generated. For example, when the work start time and the work finish time of the work package are acquired, an accurate work duration cannot be acquired unless the number of workers engaged in the work package can accurately be acquired. Moreover, when the work start time and the work finish time are acquired for each worker, an accurate work duration cannot be acquired unless all the workers engaged in the work package are registered. Thus, the accuracy of the work duration can be increased when the workers are more reliably registered in the work package. As a result, the accuracy of the work record information can be increased.

The work management may further include a second acquisition unit configured to acquire worker information on a worker, and the registration unit may be configured to associate the worker information and the identification information on the work package with each other so as to register the one or more workers in the work package. In this case, the work of registering the workers in the work package can be simplified.

The second acquisition unit may be configured to acquire the worker information while the display apparatus displays a screen for checking the permit to work. In this case, the worker information can be acquired while the work of checking the permit to work is being executed. As a result, the worker can even more reliably be registered.

The work duration information may contain a work start time and a work finish time of the work package, and a number of workers registered in the work package. In this case, man-hours required to complete the work package can be obtained by multiplying the duration from the work start time to the work finish time by the number of workers. As described above, the workers are more reliably registered in the work package, and hence the accuracy of the work duration that has been required to complete the work package can be increased.

The work duration information may contain a work start time and a work finish time of each of the one or more workers. The work start time and the work finish time may be different from worker to worker. Even in this case, a duration in which each worker is engaged in the work package can individually be calculated by acquiring the work start time and the work finish time of each worker. As a result, the accuracy of the work duration that has been required to complete the work package can be increased.

The work duration information further may contain a leave time, which is a time at which a worker leaves a work site, and a return time, which is a time at which the worker returns to the work site. In this case, a duration in which the worker is actually engaged in the work package may be calculated as the work duration. As a result, the accuracy of the work duration that has been required to complete the work package can even more be increased.

The work management device may further include a creation unit configured to create the permit to work based on information on work details input by a user. The permit to work may differ depending on the work details. With the above-mentioned configuration, the permit to work corresponding to the work details can be created.

### [ADVANTAGEOUS EFFECTS OF INVENTION]

According to the respective aspects and embodiments of this disclosure, the accuracy of the work record information can be increased.

### BRIEF DESCRIPTION OF DRAWINGS

FIG. 1 is a configuration diagram for schematically illustrating a project management system including a work management device according to an embodiment of this disclosure.
FIG. 2 is a hardware configuration diagram for illustrating a terminal apparatus illustrated in FIG. 1.
FIG. 3 is a hardware configuration diagram for illustrating another terminal apparatus illustrated in FIG. 1.
FIG. 4 is a table for showing a configuration example of a work package DB included in a server apparatus illustrated in FIG. 1.
FIG. 5 is a function block diagram of the terminal apparatus illustrated in FIG. 1.
FIG. 6 is a function block diagram of the another terminal apparatus illustrated in FIG. 1.
FIG. 7 is a sequence diagram for illustrating a series of procedures of a method of preparing a permit to work in the project management system illustrated in FIG. 1.
FIG. 8 is a diagram for illustrating a display screen example for creating a permit to work.
FIG. 9 is a diagram for illustrating a display screen example for creating the permit to work.
FIG. 10 is a diagram for illustrating a display screen example for creating the permit to work.
FIG. 11 is a diagram for illustrating a display screen example for creating the permit to work.
FIG. 12 is a diagram for illustrating a display screen example for creating the permit to work.
FIG. 13 is a diagram for illustrating a display screen example for creating the permit to work.
FIG. 14 is a diagram for illustrating a display screen example for creating the permit to work.
FIG. 15 is a diagram for illustrating a display screen example for creating the permit to work.
FIG. 16 is a diagram for illustrating a display screen example for creating the permit to work.
FIG. 17 is a flowchart for illustrating a series of procedures of a work management method to be executed by the terminal apparatus illustrated in FIG. 6.
FIG. 18 is a diagram for illustrating an example of acquisition of worker information.
FIG. 19 is a diagram for illustrating a display screen example for managing a worker.
FIG. 20 is a diagram for illustrating a configuration of a permit-to-work creation program recorded in a recording medium.
FIG. 21 is a diagram for illustrating a configuration of a work management program recorded in a recording medium.
FIG. 22 is a graph for showing an example of a temporal change in productivity.

### DESCRIPTION OF EMBODIMENTS

A detailed description is now given of an embodiment of this disclosure with reference to the accompanying drawings. In the description of the drawings, the same components are denoted by the same reference numerals, and a redundant description thereof is omitted.

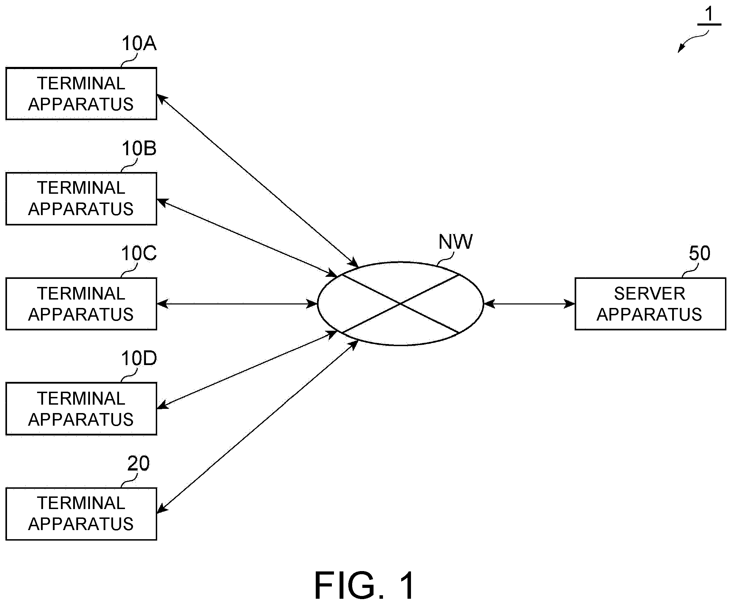

FIG. 1 is a configuration diagram for schematically illustrating a project management system including a work management device according to the embodiment. A project management system 1 illustrated in FIG. 1 is a system configured to manage a project of constructing a construction object. Examples of the construction object include a plant in a field of oil/gas and a plant in a field of infrastructure. Examples of the plant in the oil/gas field include a petroleum refinery plant, a gas treatment plant, a natural gas liquefying plant, a petrochemical plant, and a chemical product manufacturing plant. Examples of the plant in the infrastructure field include a thermal power generation plant, an atomic power generation plant, and a renewable energy power generation plant. The project may include three phases, which are engineering, procurement, and construction.

The project management system 1 uses, for example, Advanced Work Packaging (AWP) to manage a project. The AWP is a method of managing a project through use of work packages. The work package is a work unit for constructing the construction object. Details of a work, a man-hour, a cost, resources, a schedule, and the like are assigned to the work package. Examples of the work package include an engineering work package (EWP), a procurement work package (PWP), a construction work package (CWP), and an installation work package (IWP). The EWP is a work unit of the engineering. The PWP is a work unit of the procurement. The CWP is a work unit of the construction. The IWP is obtained by subdividing the CWP. The IWP is a work unit for a work supervisor to manage a site work, and is a work that can be completed in, for example, four weeks or less.

The project management system 1 includes a terminal apparatus 10A, a terminal apparatus 10B, a terminal apparatus 10C, a terminal apparatus 10D, a terminal apparatus 20 (work management device), and a server apparatus 50. The terminal apparatus 10A, the terminal apparatus 10B, the terminal apparatus 10C, the terminal apparatus 10D, the terminal apparatus 20, and the server apparatus 50 are connected to one another for communication through a network NW The network NW may be any one of a wired network and a wireless network. Examples of the network NW include the Internet, a mobile communication network, and a wide area network (WAN).

The terminal apparatus 10A is an apparatus configured to create a permit to work (PTW). The terminal apparatus 10A is used by a supervisor of a performing party that actually performs a work. Examples of the terminal apparatus 10A include a desktop personal computer (PC), a notebook PC, a tablet terminal, and a smartphone.

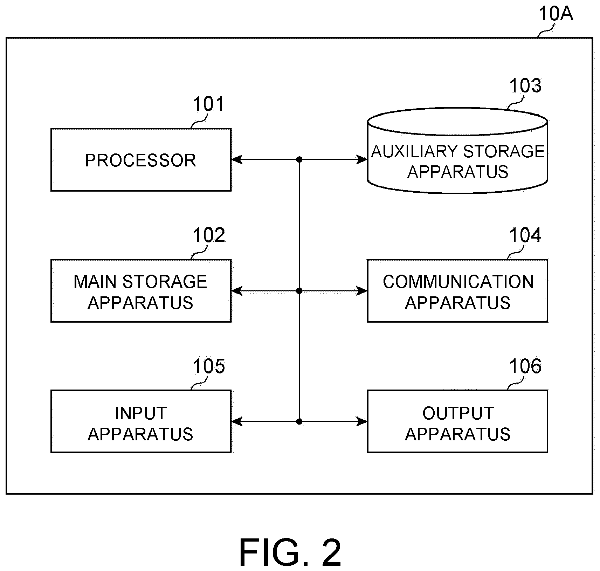

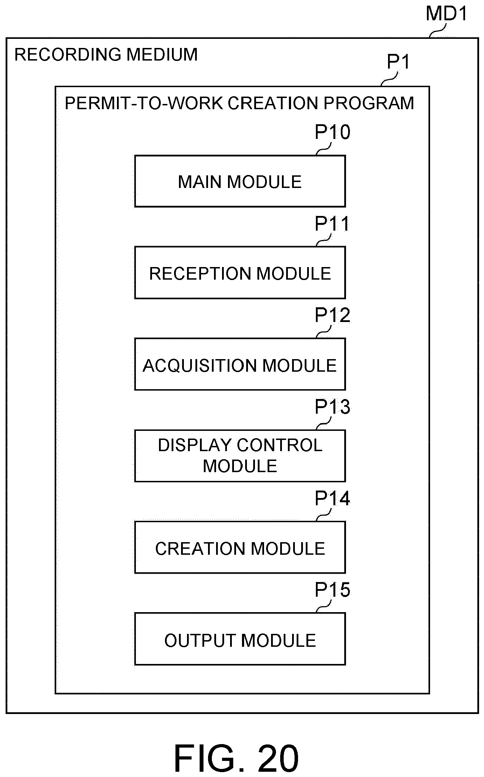

FIG. 2 is a hardware configuration diagram for illustrating the terminal apparatus illustrated in FIG. 1. As illustrated in FIG. 2, the terminal apparatus 10A may be physically constructed as a computer including hardware components such as one or a plurality of processors 101, a main storage apparatus 102, an auxiliary storage apparatus 103, a communication apparatus 104, an input apparatus 105, and an output apparatus 106. Examples of the processor 101 include a central processing unit (CPU). The main storage apparatus 102 is constructed by a random access memory (RAM), a read only memory (ROM), and the like. Examples of the auxiliary storage apparatus 103 include a semiconductor memory and a hard disk drive. The auxiliary storage apparatus 103 is configured to store a permit-to-work creation program P1 (see FIG. 20).

The communication apparatus 104 is an apparatus configured to transmit and receive data to and from other apparatus through the network NW The communication apparatus 104 is constructed by, for example, a network interface card (NIC) or a wireless communication module. Encryption may be used for the transmission/reception of data through the network NW The input apparatus 105 is an apparatus to be used when the supervisor operates the terminal apparatus 10A. The input apparatus 105 is constructed by, for example, a touch panel, a keyboard, and a mouse. The output apparatus 106 is an apparatus configured to output various types of information. The output apparatus 106 is constructed by, for example, a display and a speaker.

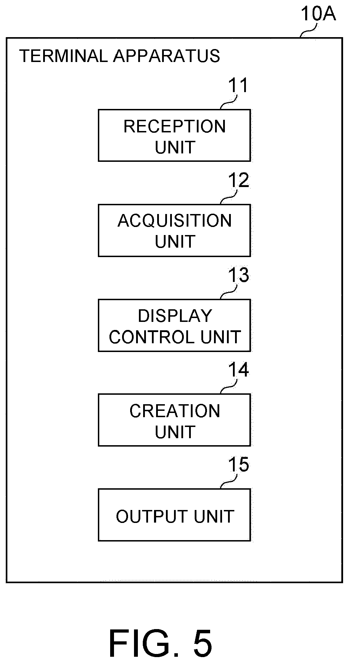

The processor 101 reads the permit-to-work creation program P1 stored in the auxiliary storage apparatus 103 onto the main storage apparatus 102, and executes the permit-to-work creation program P1 so that the respective pieces of hardware operate under the control of the processor 101, and data is read from and written to the main storage apparatus 102 and the auxiliary storage apparatus 103. As a result, respective function units of the terminal apparatus 10A illustrated in FIG. 5 are implemented.

The terminal apparatus 10B is an apparatus configured to perform primary approval for the permit to work created by the terminal apparatus 10A. The terminal apparatus 10B is used by an issuing authority. Examples of the issuing authority includes a supervisor who supervises a performing party. Examples of the terminal apparatus 10B include a desk top PC, a notebook PC, a tablet terminal, and a smartphone. The terminal apparatus 10B has the same hardware configuration as that of the terminal apparatus 10A.

The terminal apparatus 10C is an apparatus configured to perform secondary approval for the permit to work approved by the terminal apparatus 10B. The terminal apparatus 10C is used by a PTW coordinator. The PTW coordinator mainly checks a format of the permit to work. Examples of the terminal apparatus 10C include a desk top PC, a notebook PC, a tablet terminal, and a smartphone. The terminal apparatus 10C has the same hardware configuration as that of the terminal apparatus 10A.

The terminal apparatus 10D is an apparatus configured to perform final approval for the permits to work approved by the terminal apparatus 10C. The terminal apparatus 10D is used by a chief manager of a construction site. Examples of the chief manager include a site manager and a construction manager. The chief manager checks mutual relationship among all submitted permits to work, and approves the permits to work. Examples of the terminal apparatus 10D include a desk top PC, a notebook PC, a tablet terminal, and a smartphone. The terminal apparatus 10D has the same hardware configuration as that of the terminal apparatus 10A.

The terminal apparatus 20 is a portable apparatus to be used on a work site, and is an apparatus configured to manage a work for performing the project. The terminal apparatus 20 is used to check an approved permit to work before a work start. The terminal apparatus 20 registers a worker in a work package. The terminal apparatus 20 is used by the supervisor of the performing party. Examples of the terminal apparatus 20 include a tablet terminal, a smartphone, and a notebook PC.

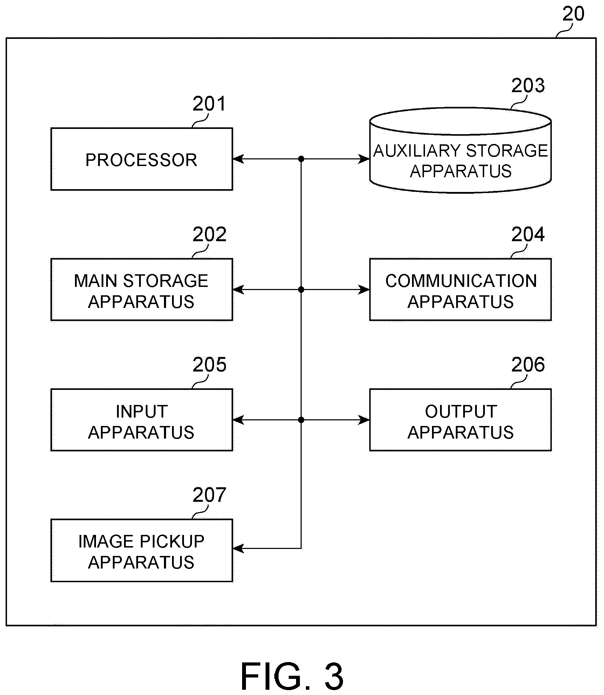

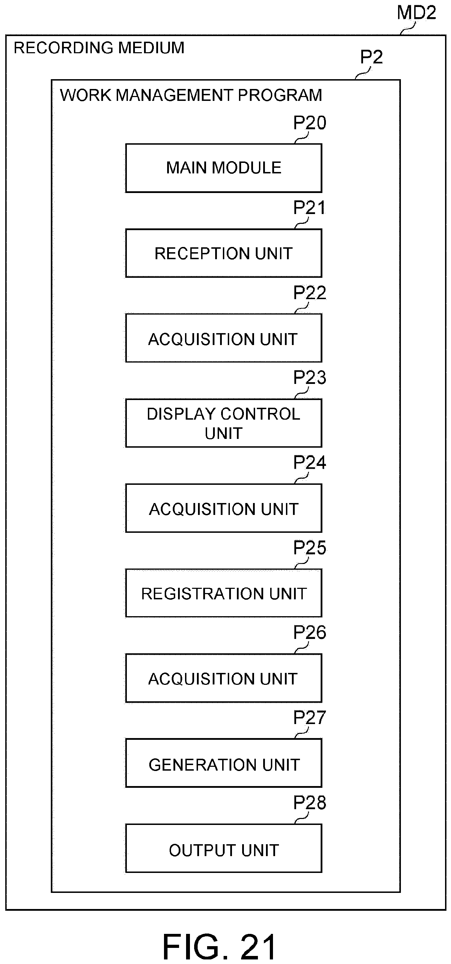

FIG. 3 is a hardware configuration diagram for illustrating the another terminal apparatus illustrated in FIG. 1. As illustrated in FIG. 3, the terminal apparatus 20 may physically be constructed as a computer including hardware such as one or a plurality of processors 201, a main storage apparatus 202, an auxiliary storage apparatus 203, a communication apparatus 204, an input apparatus 205, an output apparatus 206, and an image pickup apparatus 207. Examples of the processor 201 include a CPU. The main storage apparatus 202 is constructed by a RAM and a ROM, for example. Examples of the auxiliary storage apparatus 203 include a semiconductor memory and a hard disk drive. The auxiliary storage apparatus 203 stores a work management program P2 (see FIG. 21).

The communication apparatus 204 is an apparatus configured to transmit and receive data to and from other apparatus through the network NW The communication apparatus 204 is constructed by, for example, a network interface card (NIC) or a wireless communication module. Encryption may be used for the transmission/reception of the data through the network NW The input apparatus 205 is an apparatus to be used when the supervisor operates the terminal apparatus 20. The input apparatus 205 is constructed by, for example, a touch panel. The output apparatus 206 is an apparatus configured to output various types of information. The output apparatus 206 is constructed by, for example, a display and a speaker.

The image pickup apparatus 207 is an apparatus configured to pick up an image (perform imaging). The image pickup apparatus 207 is, for example, a camera module. Specifically, the image pickup apparatus 207 includes a plurality of components of an optical system, a plurality of circuits of a control system, and a circuit unit of a signal processing system. The components of the optical system include a lens, an image pickup element, and the like. The circuits of the control system are configured to control drive of the components of the optical system. The circuit unit of the signal processing system is configured to convert an electrical signal indicating a taken image generated by the image pickup element to an image signal, which is a digital signal.

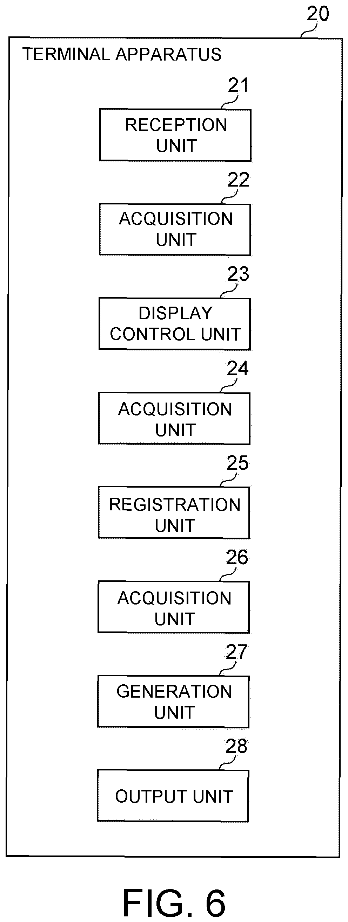

The processor 201 reads the work management program P2 stored in the auxiliary storage apparatus 203 onto the main storage apparatus 202, and executes the work management program P2 so that the respective pieces of hardware operate under the control of the processor 201, and data is read from and written to the main storage apparatus 202 and the auxiliary storage apparatus 203. As a result, respective function units of the terminal apparatus 20 illustrated in FIG. 6 are implemented.

The server apparatus 50 is an apparatus configured to function as a database configured to store various types of information. The server apparatus 50 has the same hardware configuration as that of the terminal apparatus 10A. The server apparatus 50 is not required to include the input apparatus 105 and the output apparatus 106. The server apparatus 50 includes a work package DB.

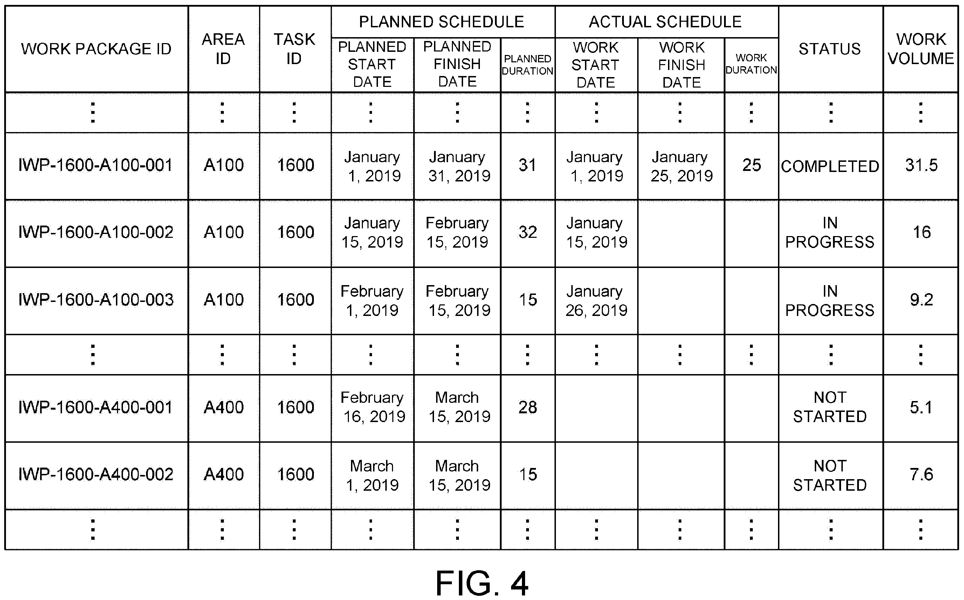

The work package DB stores a plurality of pieces of work package information. The work package information is set for each work package. As shown in FIG. 4, each piece of work package information includes a work package identifier (ID), an area ID, a task ID, planned schedule information, actual schedule information, status information, and work volume information.

The work package ID is identification information that enables a work package to be uniquely identified. The area ID is identification information that enables an area in which a work of the work package identified by the work package ID is performed to be uniquely identified. The task ID is identification information that enables details of the work (work type) of the work package identified by the work package ID to be uniquely identified. The planned schedule information includes a planned start date, a planned finish date, and a planned duration. The planned start date is a date on which the work package identified by the work package ID is planned to be started. The planned finish date is a date on which the work package identified by the work package ID is planned to be finished. The planned duration is the number of days required for the work package identified by the work package ID.

The actual schedule information includes a work start date, a work finish date, and a work duration. The work start date is an actual date on which the work package identified by the work package is started. The work finish date is an actual date on which the work package identified by the work package is finished. The work duration is an actual number of days required for the work package identified by the work package. The status information is information on a progress state of the work package identified by the work package ID. The progress state includes, for example, "not started", "in progress", and "completed". The work volume information is information on a work volume of the work package identified by the work package ID.

The configuration of the work package DB is not limited to the configuration shown in FIG. 4. The configuration of the work package DB may be changed by a publicly-known method.

As illustrated in FIG. 5, the terminal apparatus 10A functionally includes a reception unit 11, an acquisition unit 12, a display control unit 13, a creation unit 14, and an output unit 15.

The reception unit 11 is a function unit configured to receive an operation of the user (supervisor) of the terminal apparatus 10A. The reception unit 11 outputs operation information indicating details of the operation of the user to the acquisition unit 12, the display control unit 13, and the creation unit 14.

The acquisition unit 12 is a function unit configured to acquire work package information. The acquisition unit 12 acquires, for example, one piece of or a plurality of pieces of work package information from the server apparatus 50. The acquisition unit 12 outputs the work package information to the display control unit 13.

The display control unit 13 is a function unit configured to display various images on a display apparatus (display) of the output apparatus 106. The display control unit 13 outputs display information for displaying predetermined information to the display apparatus of the terminal apparatus 10A, and the display apparatus of the terminal apparatus 10A displays the predetermined information based on the display information. The display control unit 13 displays each screen on the display apparatus of the terminal apparatus 10A based on an operation of the user. For example, the display control unit 13 displays a screen for creating a permit to work on the display apparatus of the terminal apparatus 10A.

The creation unit 14 is a function unit configured to create a permit to work. The creation unit 14 creates a permit to work based on information on details of the work input by the user. The creation unit 14 creates a certificate described later in accordance with necessity. A description is later given of a procedure of creating the permit to work. The creation unit 14 outputs to the output unit 15 PTW information indicating the permit to work and the certificate.

The output unit 15 is a function unit configured to output the PTW information. When the output unit 15 receives the PTW information from the creation unit 14, the output unit 15 transmits (outputs) the PTW information to the server apparatus 50, to thereby store the PTW information in the server apparatus 50, and transmits to the terminal apparatus 10B a request to approve the permit to work. The output unit 15 may transmit (output) to the terminal apparatus 10B the PTW information together with the request to approve the permit to work.

As illustrated in FIG. 6, the terminal apparatus 20 functionally includes a reception unit 21, an acquisition unit 22, a display control unit 23, an acquisition unit 24 (second acquisition unit), a registration unit 25, an acquisition unit 26 (first acquisition unit), a generation unit 27, and an output unit 28.

The reception unit 21 is a function unit configured to receive an operation of the user (supervisor) of the terminal apparatus 20. The reception unit 21 is configured to output operation information on details of the operation of the user to the acquisition unit 22, the display control unit 23, the acquisition unit 24, the registration unit 25, the acquisition unit 26, and the generation unit 27.

The acquisition unit 22 is a function unit configured to acquire the PTW information. The acquisition unit 22 acquires, for example, a list of permits to work from the server apparatus 50, and controls the display control unit 23 so as to display the list on the display apparatus of the terminal apparatus 20. The acquisition unit 22 acquires from the server apparatus 50 the PTW information on a permit to work selected by the user. The acquisition unit 22 may acquire a plurality of pieces of work package information from the server apparatus 50, and control the display control unit 23 so as to display a list of the work packages on the display apparatus of the terminal apparatus 20. In this case, the acquisition unit 22 may acquire from the server apparatus 50 the PTW information on a work package selected by the user. The acquisition unit 22 outputs the PTW information to the display control unit 23.

The display control unit 23 is a function unit configured to display various images on a display apparatus (display) of the output apparatus 206. The display control unit 23 outputs display information for displaying predetermined information to the display apparatus of the terminal apparatus 20, and the display apparatus of the terminal apparatus 20 displays the predetermined information based on the display information. The display control unit 23 displays each screen on the display apparatus of the terminal apparatus 20 based on an operation of the user. For example, the display control unit 23 displays a permit to work of a work package on the display apparatus of the terminal apparatus 20. Specifically, when the display control unit 23 receives the PTW information from the acquisition unit 22, the display control unit 23 displays a permit to work on the display apparatus of the terminal apparatus 20 based on the PTW information.

The acquisition unit 24 is a function unit configured to acquire worker information on a worker. The worker information includes, for example, a worker ID, a worker name, and a company name. The worker ID is identification information that enables a worker to be uniquely identified. The worker name is a name of the worker identified by the worker ID. The company name is a name of a company to which the worker identified by the worker ID belongs. For example, the acquisition unit 24 acquires the worker information while the display apparatus of the terminal apparatus 20 displays a screen for checking a permit to work. The acquisition unit 24 outputs the worker information to the registration unit 25.

The registration unit 25 is a function unit configured to register one or more workers in a work package. When the registration unit 25 receives worker information from the acquisition unit 24 under a state in which a work package is selected by the user, the registration unit 25 registers a worker indicated by the worker information in the selected work package. For example, when the screen for checking a permit to work of a work package is displayed on the display apparatus of the terminal apparatus 20, it is considered that this work package is selected. One work package may be selected from a list of work packages. The registration unit 25 creates registration information that associates the work package ID of the selected work package and the worker information (for example, worker ID) with each other so as to register the worker in the work package. The registration unit 25 outputs the registration information to the acquisition unit 26.

The acquisition unit 26 is a function unit configured to acquire work duration information indicating a work duration that has been required to complete a work package. The work duration information includes, for example, work start time and work finish time of the work package, and the number of workers registered in the work package. The work start time of the work package is a time at which the work package is started. The work finish time of the work package is a time at which the work package is finished (completed).

For example, when the user (supervisor) presses a start button displayed on the display apparatus of the terminal apparatus 20 under a state in which one work package is selected by the user from a list of work packages displayed on the display apparatus of the terminal apparatus 20, the acquisition unit 26 acquires a time of the pressing as the work start time of this work package. Similarly, when the user (supervisor) presses a finish button displayed on the display apparatus of the terminal apparatus 20 under a state in which the one work package is selected, the acquisition unit 26 acquires a time of the pressing as the work finish time of this work package. The acquisition unit 26 acquires the number of workers registered in the work package based on the registration information.

The work duration information may include, for example, a work start time and a work finish time of each of workers. The work start time of a worker is a time at which the worker starts a work. The work finish time of a worker is a time at which the worker finishes the work. In this case, when the user presses the start button under a state in which a worker is selected, the acquisition unit 26 acquires the time of the pressing as the work start time of this worker. Similarly, when the user presses the finish button under a state in which a worker is selected, the acquisition unit 26 acquires the time of the pressing as the work finish time of this worker.

The work duration information may further contain a leave time and a return time. The leave time are a time at which the worker leaves a work site for rest or the like. The return time are a time at which the worker returns to the work site. For example, a gate is provided between the work site and an outside of the work site, and a card reader is provided on each of the work site side and the outside of the work site. The gate opens when the worker holds an ID card over the card reader. The acquisition unit 26 acquires a time at which the card reader on the work site side reads the worker information from the ID card as the leave time. The acquisition unit 26 acquires a time at which the card reader on the outside of the work site reads the worker information from the ID card as the return time.

The acquisition unit 26 outputs the work duration information to the generation unit 27.

The generation unit 27 is a function unit configured to generate work record information. The work record information includes the work package ID and the work duration information. When the generation unit 27 receives the work duration information from the acquisition unit 26, the generation unit 27 generates the work record information that associates the work package ID and the work duration information with each other. The generation unit 27 outputs the work record information to the output unit 28.

The output unit 28 is a function unit configured to output the work record information. When the output unit 28 receives the work record information from the generation unit 27, the output unit 28 transmits (outputs) the work record information to the server apparatus 50, for example.

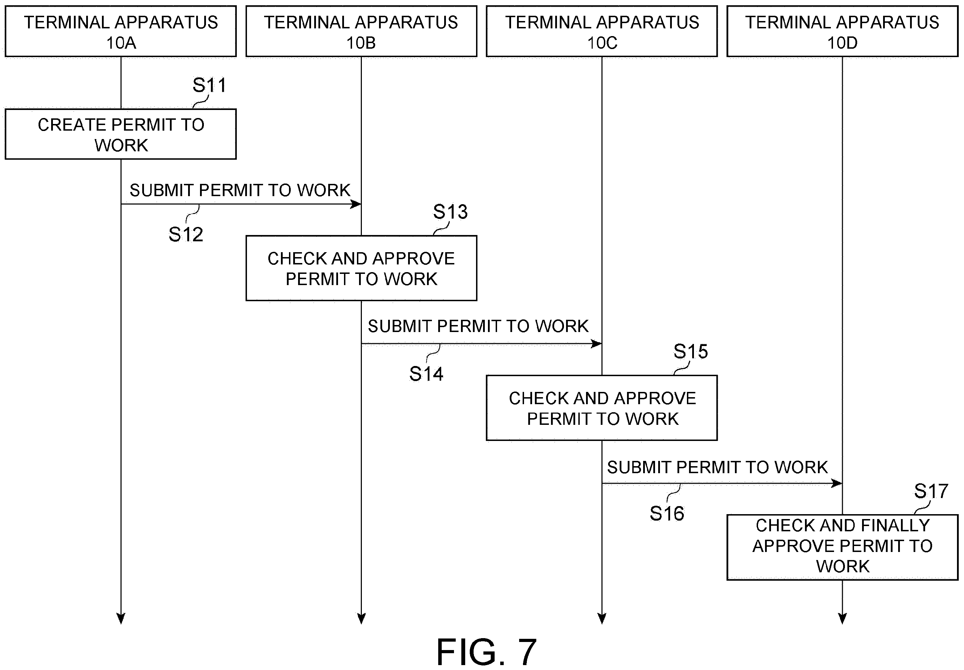

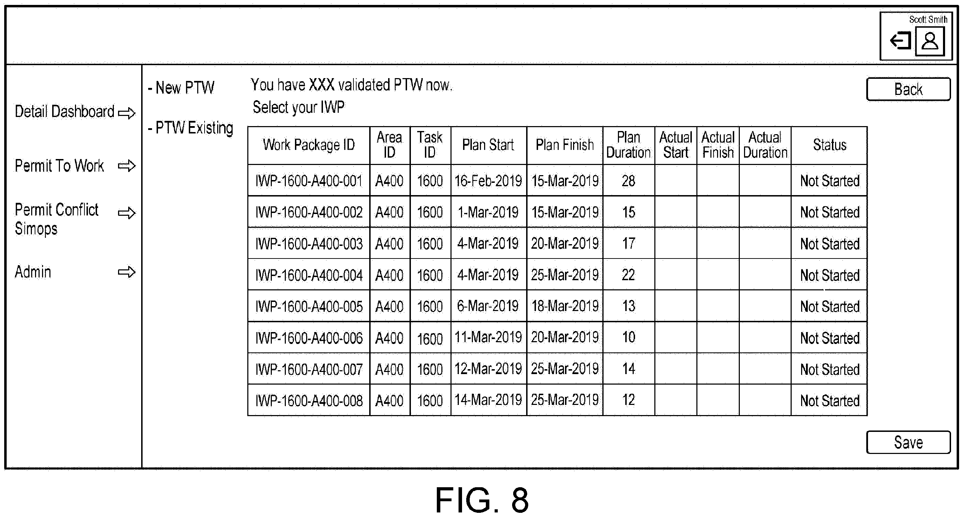

A description is now given of a series of procedures for a method of preparing a permit to work. FIG. 7 is a sequence diagram for illustrating the series of procedures of the method of preparing a permit to work in the project management system illustrated in FIG. 1. FIG. 8 to FIG. 16 are diagrams for illustrating display screen examples for creating a permit to work. The series of procedures illustrated in FIG. 7 is performed in, for example, an office on site.

As illustrated in FIG. 7, first, the terminal apparatus 10A creates a permit to work (Step S11). In Step S11, an application for performing an operation (creation and check) relating to the permit to work in the terminal apparatus 10A is activated. Then, the user (supervisor) of the terminal apparatus 10A selects to newly create a permit to work on a display screen (not shown) displayed on the terminal apparatus 10A.

Subsequently, the user of the terminal apparatus 10A sets a work (subject work) for which a permit to work is to be created. In this case, a description is given of an example in which the subject work is set by selecting a work package already created. First, the acquisition unit 12 acquires work package information from the server apparatus 50. At this time, the acquisition unit 12 may acquire work package information on all of work packages contained in a project, or may acquire only work package information on work packages that meets conditions specified by the user. The acquisition unit 12 outputs the work package information to the display control unit 13.

As illustrated in FIG. 8, when the display control unit 13 receives the work package information from the acquisition unit 12, the display control unit 13 controls the display apparatus of the terminal apparatus 10A so as to display the work packages in a list form based on the work package information. On this screen, the user of the terminal apparatus 10A selects a work package in which the performing party of the user is scheduled to engage from among the plurality of displayed work packages. The work package selected in such a manner is set as the subject work.

Subsequently, a type of the permit to work for the subject work and presence/absence of a certificate for the subject work are set. As the type of the permit to work, there are a permit to work for a hot work and a permit to work for a cold work. The hot work is a work that generates heat or sparks. Examples of the hot work include grinding, cutting, and welding. The cold work is a work that does not generate heat and sparks. Examples of the certificate include a certificate for permitting a confined space work, a certificate for permitting an excavation work, a certificate for permitting lock-out tag-out (LOTO), and a certificate for permitting radiography.

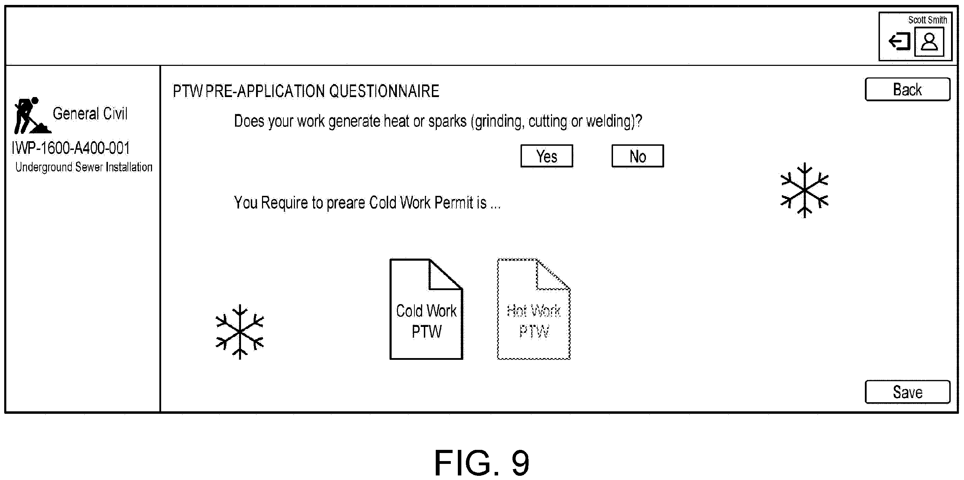

As illustrated in FIG. 9, the display control unit 13 displays on the display apparatus of the terminal apparatus 10A a screen for selecting whether the work of the work package is a hot work or a cold work. In an example illustrated in FIG. 9, a question of "Does your work generate heat or sparks (grinding, cutting or welding)?" is displayed. When the user of the terminal apparatus 10A presses a "Yes" button, a hot work is selected. When the user presses a "No" button, a cold work is selected. A permit to work for the cold work is selected in this example.

In the example illustrated in FIG. 9, the work package ID, the work type, and specific details of the work of the selected work package are displayed on a left end of the screen. For example, in the example illustrated in FIG. 9, a work package IWP having a work package ID of "IWP-1600-A400-001" is selected. The work type of this work package is a general civil construction, and the specific details of the work are a work of installing underground sewer pipes. The civil construction includes site investigation, site development, subsoil improvement, piling, a road & pave construction, and a fence & gate construction, in addition to a sewer & drainage construction. When the work package information does not contain the work type and the specific details of the work, the user of the terminal apparatus 10A may set the work type and the specific details of the work.

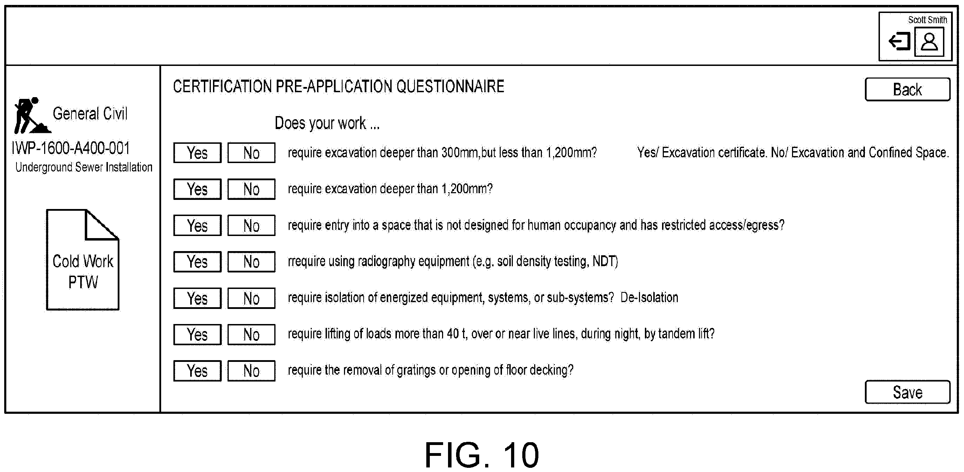

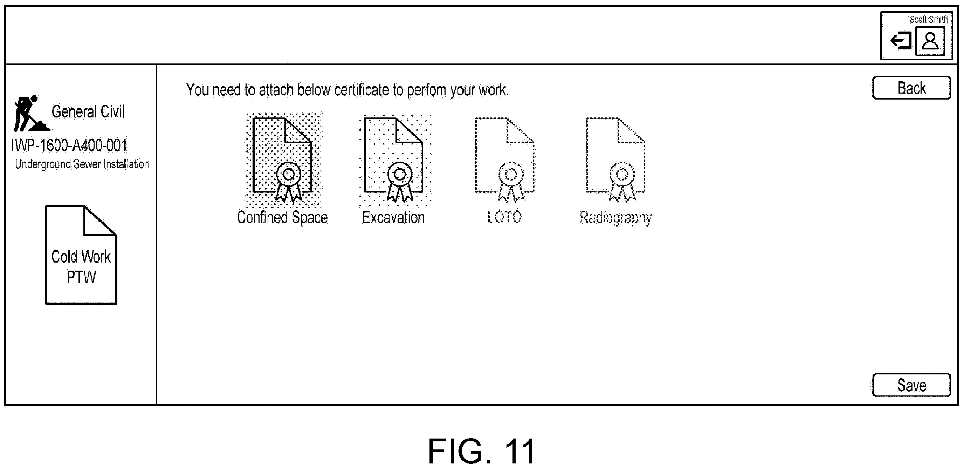

Subsequently, as illustrated in FIG. 10, the display control unit 13 displays on the display apparatus of the terminal apparatus 10A detailed questions about the details of the work. For example, yes-no questions are used. Examples of the detailed question include a question about a depth of excavation. The creation unit 14 determines whether or not certificates are required for the permit to work based on answers of the user to those questions. In the example illustrated in FIG. 11, the creation unit 14 determines that a certificate for permitting the confined space work and a certificate for permitting the excavation work are further required in addition to the permit to work.

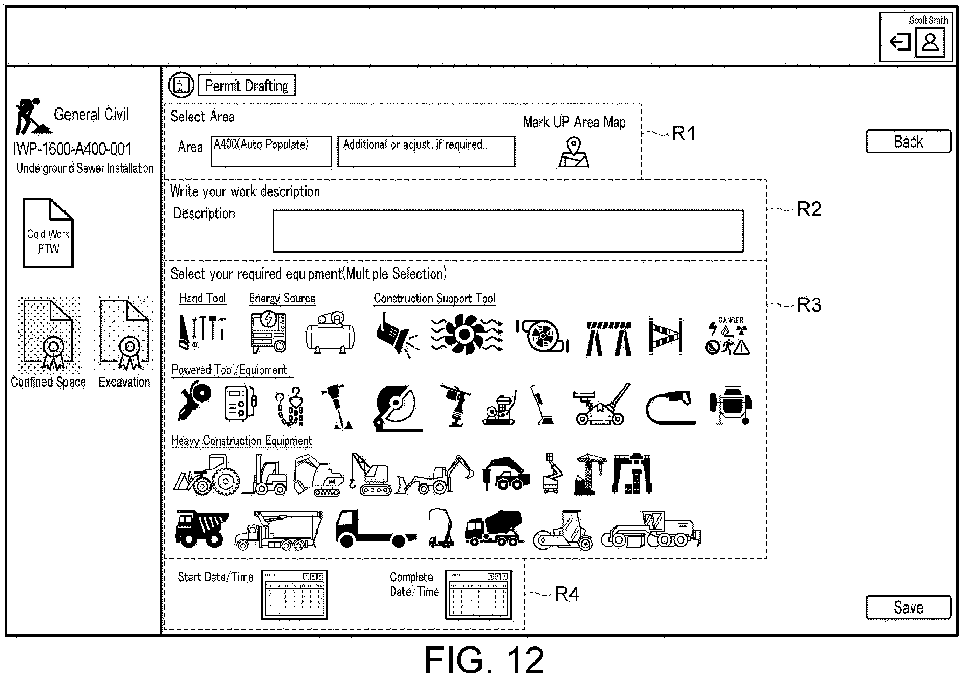

Subsequently, detailed information to be written in the permit to work is set. As illustrated in FIG. 12, the display control unit 13 displays a screen including a region R1, a region R2, a region R3, and a region R4 on the display apparatus of the terminal apparatus 10A. The region R1 is used to select an area. The region R2 is used to write specific details of the work. The region R3 is used to select tools and construction equipment to be used for the work. The region R4 is used to set a planned start date (planned start time) and a planned complete date (planned complete time). In this example, the area ID of the selected work package is set. The user of the terminal apparatus 10A inputs the specific details of the work in a text box of the region R2. The user of the terminal apparatus 10A selects icons of the tools and construction equipment to be used for the work, from among a plurality of icons each representing a tool or construction equipment in the region R3. The user of the terminal apparatus 10A further sets the planned start time and the planned complete time in the region R4.

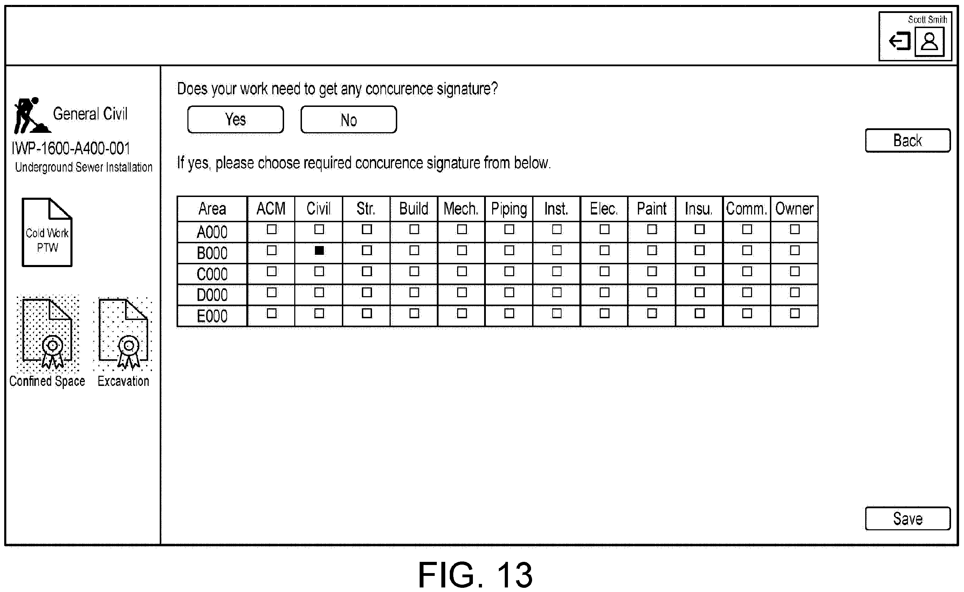

Further, as illustrated in FIG. 13, the display control unit 13 displays on the display apparatus of the terminal apparatus 10A a screen for setting sections that may be influenced by the work. In the example illustrated in FIG. 13, the user of the terminal apparatus 10A selects whether or not concurrence needs to be gotten, that is, whether or not the work may influence other sections. Then, when the concurrence needs to be gotten, the user of the terminal apparatus 10A further selects specific areas and sections.

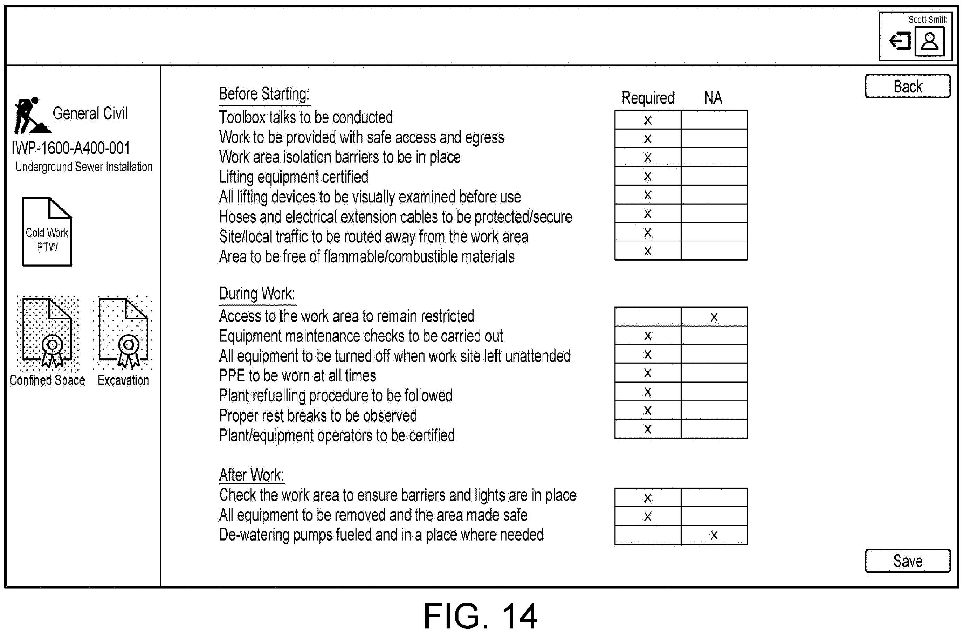

Further, as illustrated in FIG. 14, the display control unit 13 displays on the display apparatus of the terminal apparatus 10A a list of items to be checked before the start of the work, a list of items to be checked during the work, and a list of items to be checked after the finish of the work. The user of the terminal apparatus 10A selects required check items from each of the lists.

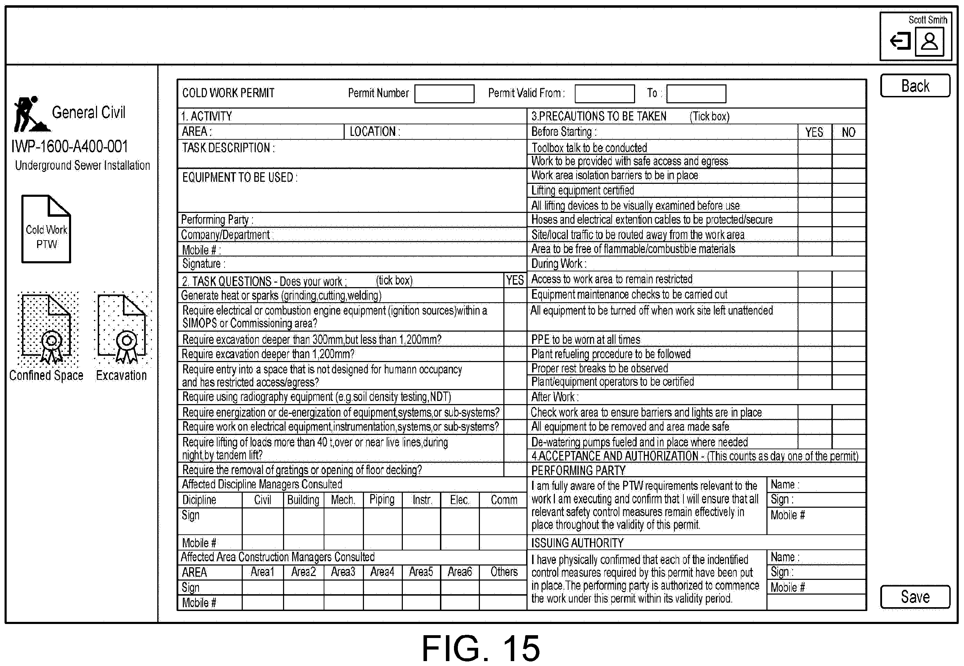

Then, the creation unit 14 reflects the detailed information input by the user of the terminal apparatus 10A in a template of the permit to work, to thereby create a permit to work. In FIG. 15, a template of the permit to work for the cold work is illustrated. The creation unit 14 reflects the information input in the screens illustrated in FIG. 12 to FIG. 14 in this template. The permit to work is created as described above.

When certificates are required, the display control unit 13 displays a screen for inputting detailed information for creating the certificates on the display apparatus of the terminal apparatus 10A. The creation unit 14 reflects the detailed information input by the user of the terminal apparatus 10A in templates of the certificate, to thereby create the certificates.

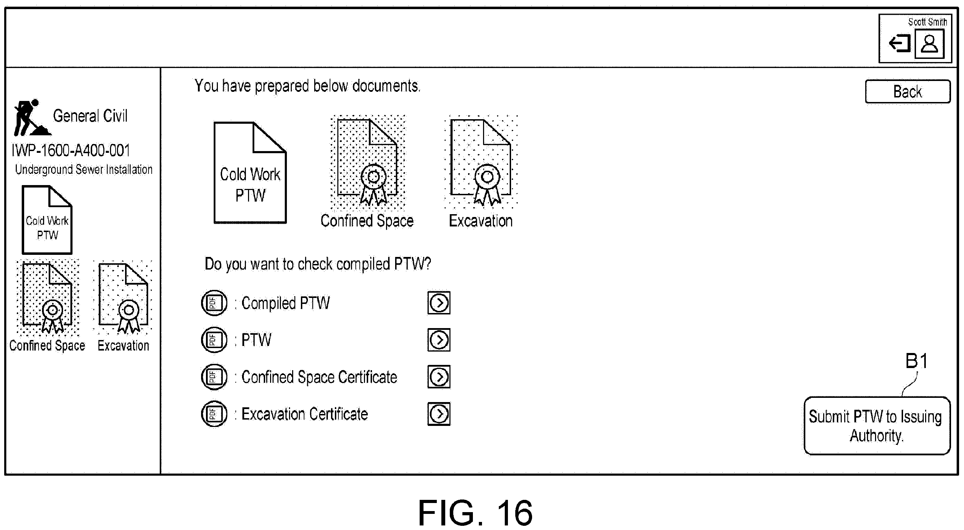

Then, as illustrated in FIG. 16, the display control unit 13 displays a screen for checking the permit to work and the certificates on the display apparatus of the terminal apparatus 10A. The user of the terminal apparatus 10A checks the permit to work and the certificates, and presses a submit button B1 when the user determines that there is no problem. As a result, the output unit 15 submits (outputs) the permit to work and the certificates to the terminal apparatus 10B (Step S12). Specifically, the output unit 15 transmits (outputs) the PTW information to the server apparatus 50 and stores the PTW information in the server apparatus 50, and transmits a request to approve the permit to work to the terminal apparatus 10B.

Subsequently, the terminal apparatus 10B receives the approval request from the terminal apparatus 10A. Then, when an application for performing an operation relating to the permit to work is activated in the terminal apparatus 10B, the terminal apparatus 10B reads the PTW information from the server apparatus 50 based on the approval request, and displays the same screen as that of FIG. 16. Then, the user of the terminal apparatus 10B checks the permit to work and the work certificates. When the user of the terminal apparatus 10B determines that the permit to work and the certificates have a problem, the user presses a back button. As a result, the terminal apparatus 10B rejects the permit to work and the certificates, and returns the permit to work and the certificates to the terminal apparatus 10A. Meanwhile, when the user of the terminal apparatus 10B determines that the permit to work and the certificates do not have a problem, the user presses the submit button. As a result, the terminal apparatus 10B approves the permit to work and the certificates (Step S13), and submits the permit to work and the certificates to the terminal apparatus 10C (Step S14). Specifically, the terminal apparatus 10B transmits a request to approve the permit to work to the terminal apparatus 10C.

Subsequently, the terminal apparatus 10C receives the approval request from the terminal apparatus 10B. Then, when an application for performing an operation relating to the permit to work is activated in the terminal apparatus 10C, the terminal apparatus 10C reads the PTW information from the server apparatus 50 based on the approval request, and displays the same screen as that of FIG. 16. Then, the user of the terminal apparatus 10C checks the permit to work and the work certificates. When the user of the terminal apparatus 10C determines that the permit to work and the certificates have a problem, the user presses a back button. As a result, the terminal apparatus 10C rejects the permit to work and the certificates, and returns the permit to work and the certificates to the terminal apparatus 10A. Meanwhile, when the user of the terminal apparatus 10C determines that the permit to work and the certificates do not have a problem, the user presses the submit button. As a result, the terminal apparatus 10C approves the permit to work and the certificates (Step S15), and submits the permit to work and the certificates to the terminal apparatus 10D (Step S16). Specifically, the terminal apparatus 10C transmits a request to approve the permit to work to the terminal apparatus 10D.

Subsequently, the terminal apparatus 10D receives the approval request from the terminal apparatus 10C. Then, when an application for performing an operation relating to the permit to work is activated in the terminal apparatus 10D, the terminal apparatus 10D reads the PTW information from the server apparatus 50 based on the approval request, and displays the same screen as that of FIG. 16. Then, the user of the terminal apparatus 10D checks the permit to work and the work certificates. When the user of the terminal apparatus 10D determines that the permit to work and the certificates have a problem, the user presses a back button. As a result, the terminal apparatus 10D rejects the permit to work and the certificates, and returns the permit to work and the certificates to the terminal apparatus 10A. Meanwhile, when the user of the terminal apparatus 10D determines that the permit to work and the certificates do not have a problem, the user presses the submit button. As a result, the terminal apparatus 10D finally approves the permit to work and the certificates (Step S17). As a result, the series of procedures of preparing the permit to work is finished.

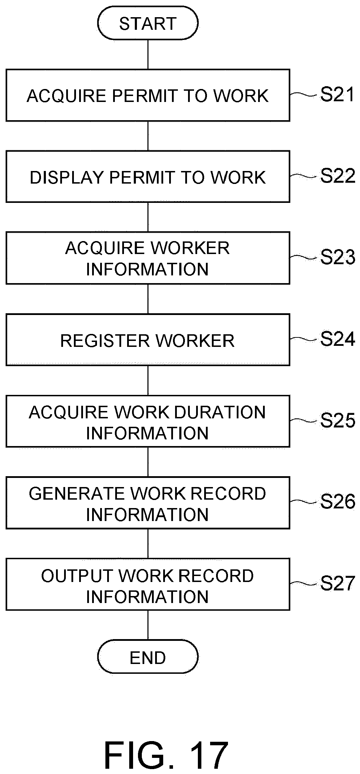

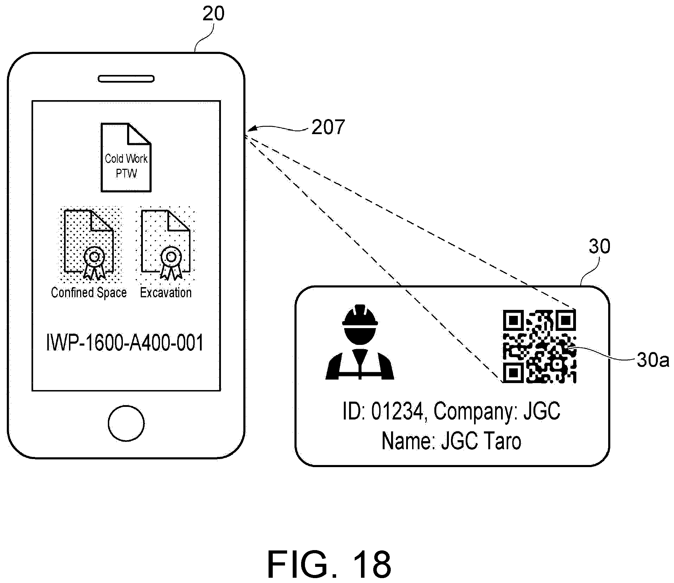

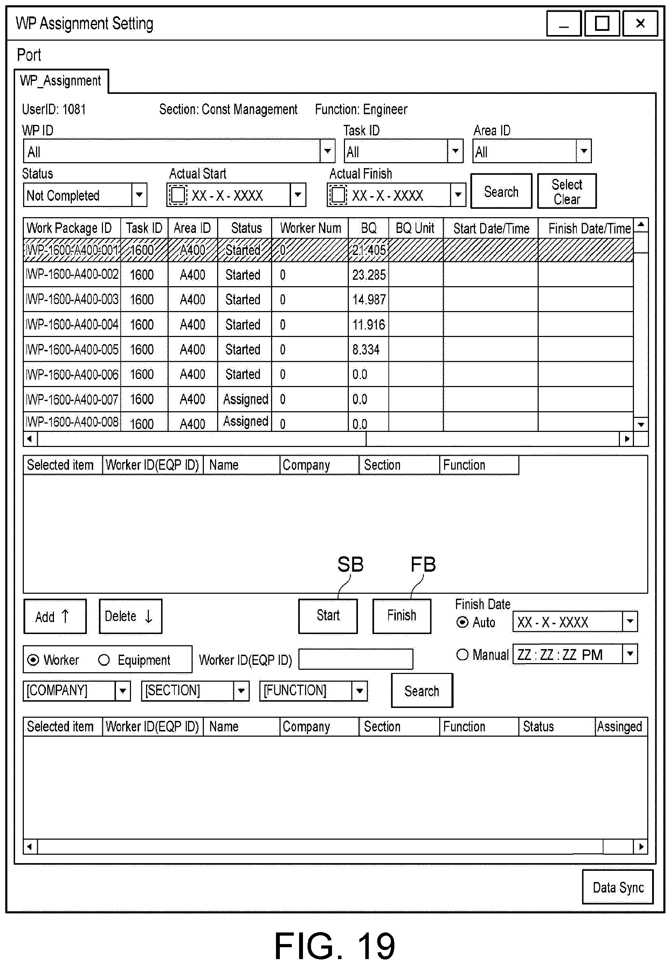

A description is now given of a series of procedures of a work management method. FIG. 17 is a flowchart for illustrating the series of procedures of the work management method to be executed by the terminal apparatus illustrated in FIG. 6. FIG. 18 is a diagram for illustrating an example of acquisition of the worker information. FIG. 19 is a diagram for illustrating a display screen example for managing a worker. The series of procedures illustrated in FIG. 17 is performed on, for example, a work site.

As illustrated in FIG. 17, first, the acquisition unit 22 acquires a permit to work (Step S21). In Step S21, an application for performing an operation relating to the permit to work in the terminal apparatus 20 is activated. Then, the user (supervisor) of the terminal apparatus 20 selects to check an approved permit to work on a display screen (not shown) displayed on the terminal apparatus 20. As a result, the acquisition unit 22 acquires from the server apparatus 50 the PTW information on the approved permit to work and certificates. Then, the acquisition unit 22 outputs the PTW information to the display control unit 23.

Subsequently, when the display control unit 23 receives the PTW information from the acquisition unit 22, the display control unit 23 displays a screen for checking the permit to work and the certificates on the display apparatus of the terminal apparatus 20 as in FIG. 16. Then, when the user of the terminal apparatus 20 selects the permit to work, the display control unit 23 displays the permit to work on the display apparatus of the terminal apparatus 20 (Step S22). Then, the user of the terminal apparatus 20 prompts all the workers of the performing party to check the details of the permit to work. Similarly, when the user of the terminal apparatus 20 selects the certificate, the display control unit 23 displays the certificate on the display apparatus of the terminal apparatus 20. Then, the user of the terminal apparatus 20 prompts all the workers of the performing party to check the details of the certificate.

Subsequently, the acquisition unit 24 acquires the worker information (Step S23). In Step S23, as illustrated in FIG. 18, the user of the terminal apparatus 20 uses the image pickup apparatus 207 of the terminal apparatus 20 to read a QR code (trademark) 30a attached to an ID card 30 of the worker of the performing party under a state in which a screen on which the permit to work and the certificates can be checked is displayed. The QR code 30a attached to the ID card 30 includes the worker information on the worker, who is an owner of the ID card 30. Therefore, the acquisition unit 24 may acquire the worker information on that worker from the QR code 30a. The user of the terminal apparatus 20 sequentially reads the QR codes 30a attached to the ID cards 30 of all the workers of the performing party in such a manner, and the acquisition unit 24 acquires pieces of worker information corresponding to all the workers. Then, the acquisition unit 24 outputs the worker information to the registration unit 25.

Subsequently, the registration unit 25 registers the workers in the work package (Step S24). Specifically, when the registration unit 25 receives the plurality of pieces of worker information from the acquisition unit 24, the registration unit 25 associates the work package ID and the worker information (for example, the worker IDs) corresponding to the permit to work on the screen displayed on the display apparatus of the terminal apparatus 20 with each other so as to register the workers in the work package. As a result, all the workers engaged in the work package are registered in this work package.

Subsequently, the acquisition unit 26 acquires the work duration information (Step S25). In Step S25, the user of the terminal apparatus 20 activates an application for performing work management. In this application, for example, information including a work package ID, a task ID, an area ID, a status, the number of workers, a work volume, a unit, a work start time, a work finish time, and the like is displayed for each of the work packages, as illustrated in FIG. 19. The user of the terminal apparatus 20 selects a work package in which the performing party of the user is engaged.

When the user of the terminal apparatus 20 presses a start button SB under the state in which the work package is selected, the acquisition unit 26 acquires a time at which the start button SB is pressed as a work start time of the selected work package. Moreover, when the user of the terminal apparatus 20 presses a finish button FB under the state in which the work package is selected, the acquisition unit 26 acquires a time at which the finish button FB is pressed as a work finish time of the selected work package. The acquisition unit 26 acquires the work start time and the work finish time for each work package, but the acquisition unit 26 may acquire work start time and work finish time for each worker, in place of the work start time and the work finish time for each work package. The acquisition unit 26 may further acquire the work start time and work finish time for each worker in addition to the work start time and the work finish time for each work package.

The acquisition unit 26 may further acquire the leave time and the return time as the work duration information. For example, the acquisition unit 26 acquires a time at which the card reader on the work site side reads the worker information from the ID card 30 as the leave time. The acquisition unit 26 acquires a time at which the card reader on the outside reads the worker information from the ID card 30 as the return time. The acquisition unit 26 may acquire a time at which position information on the worker moves out from the work site to the outside as the leave time, and may acquire a time at which position information on the worker returns from the outside to the work site as the return time. Then, the acquisition unit 26 outputs the work duration information to the generation unit 27.

Subsequently, the generation unit 27 generates the work record information (Step S26). In Step S26, when the generation unit 27 receives the work duration information from the acquisition unit 26, the generation unit 27 associates the work package ID and the work duration information with each other, to thereby generate the work record information. Then, the generation unit 27 outputs the work record information to the output unit 28.

Subsequently, the output unit 28 outputs the work record information (Step S27). When the output unit 28 receives the work record information from the generation unit 27, the output unit 28 transmits (outputs) the work record information to the server apparatus 50, for example.

As a result, the series of procedures of the work management method is finished.

Referring to FIG. 20, a description is now given of a permit-to-work creation program P1 for causing a computer to function as the terminal apparatus 10A and a recording medium MD1 having recorded thereon the permit-to-work creation program P1. FIG. 20 is a diagram for illustrating a configuration of the permit-to-work creation program recorded in the recording medium.

As illustrated in FIG. 20, the permit-to-work creation program P1 includes a main module P10, a reception module P11, an acquisition module P12, a display control module P13, a creation module P14, and an output module P15. The main module P10 is a part configured to integrally control processing relating to the creation of a permit to work. Respective functions implemented by executing the reception module P11, the acquisition module P12, the display control module P13, the creation module P14, and the output module P15 are the same as the respective functions of the reception unit 11, the acquisition unit 12, the display control unit 13, the creation unit 14, and the output unit 15 in the above-mentioned embodiment.

The permit-to-work creation program P1 is supplied through the computer-readable recording medium MD1, such as a compact disc-read only memory (CD-ROM), a digital versatile disc-read only memory (DVD-ROM), and a semiconductor memory. The permit-to-work creation program P1 may be supplied as a data signal through the network NW.

Referring to FIG. 21, a description is now given of a work management program P2 for causing a computer to function as the terminal apparatus 20 and a recording medium MD2 having recorded thereon the work management program P2. FIG. 21 is a diagram for illustrating a configuration of the work management program recorded in the recording medium.

As illustrated in FIG. 21, the work management program P2 includes a main module P20, a reception module P21, an acquisition module P22, a display control module P23, an acquisition module P24, a registration module P25, an acquisition module P26, a generation module P27, and an output module P28. The main module P20 is a part configured to integrally control processing relating to the work management. Respective functions implemented by executing the reception module P21, the acquisition module P22, the display control module P23, the acquisition module P24, the registration module P25, the acquisition module P26, the generation module P27, and the output module P28 are the same as the respective functions of the reception unit 21, the acquisition unit 22, the display control unit 23, the acquisition unit 24, the registration unit 25, the acquisition unit 26, the generation unit 27, and the output unit 28 in the above-mentioned embodiment.

The work management program P2 is supplied through the computer-readable recording medium MD2, such as a CD-ROM, a DVD-ROM, and a semiconductor memory. The work management program P2 may be supplied as a data signal through the network NW

In the terminal apparatus 20, the work management method, and the recording medium MD2 having recorded thereon the work management program P2, which are described above, the permit to work for the work package is displayed, and one or more workers are registered in the work package. The permit to work is always required to be checked before the start of the work, and hence the worker can more reliably be registered by performing the work of registering the worker together with the work of checking the permit to work. Then, the work duration information indicating the work duration that has been required to complete the work package is acquired, and the work record information is generated. For example, when the work start day and time and the work finish day and time of the work package are acquired, an accurate work duration cannot be acquired unless the number of workers engaged in the work package can accurately be grasped. Moreover, when the work start day and time and the work finish day and time are acquired for each worker, an accurate work duration cannot be acquired unless all the workers engaged in the work package are registered. Thus, the accuracy of the work duration can be increased when the workers are more reliably registered in the work package. As a result, the accuracy of the work record information can be increased.

The registration unit 25 associates worker information and a work package ID, to thereby register the worker in a work package. With this configuration, the work of registering the workers in the work package can be simplified.

The acquisition unit 24 acquires the worker information while the display apparatus of the terminal apparatus 20 displays a screen for checking a permit to work. With this configuration, the worker information can be acquired while the work of checking the permit to work is being performed. As a result, the worker can even more reliably be registered.

A value indicating the productivity is calculated based on the work record information. This value is calculated by, for example, dividing the work duration (MH) by the work volume. When the work duration information includes the work start time and the work finish time of the work package and the number of workers registered in the work package, the work duration (MH) required to complete the work package is obtained by multiplying the duration from the work start time to the work finish time by the number of workers. As described above, the workers are more reliably registered in the work package, and hence the accuracy of the work duration that has been required to complete the work package can be increased.

The work start time and the work finish time may be different from worker to worker. Even in this case, a duration in which each worker is engaged in the work package can individually be calculated by the acquisition unit 26 acquiring the work start time and the work finish time of each worker. In this case, the work duration (MH) required to complete the work package is obtained by summing durations in which the respective workers are engaged in the work package. As a result, the accuracy of the work duration that has been required to complete the work package can be increased.

When the work duration information further includes the leave time and the return time, a duration in which the worker is actually engaged in the work package may be calculated. As a result, the accuracy of the work duration that has been required to complete the work package can further be increased.

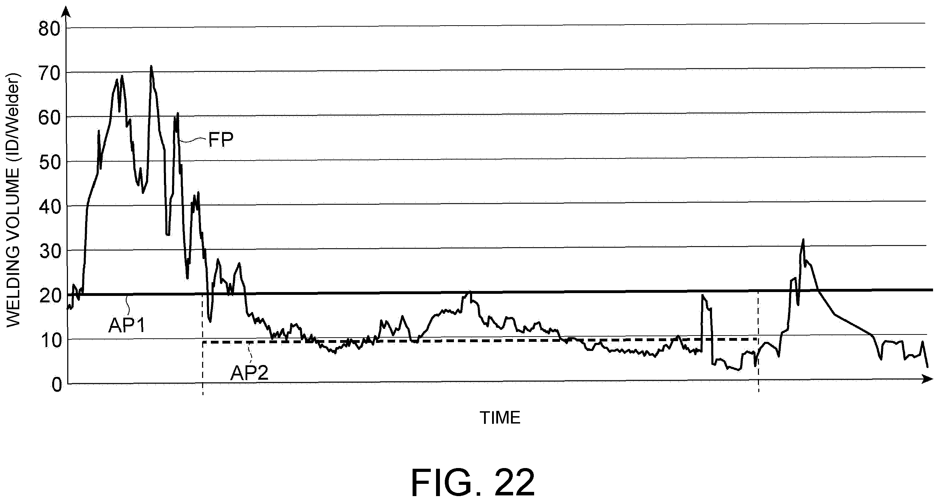

For example, as shown in FIG. 22, the work volume per worker may change as the time elapses. The horizontal axis of FIG. 22 indicates time. The vertical axis of FIG. 22 indicates the work volume per worker. In this case, the vertical axis indicates a welding volume per welder (ID/welder). The welding volume of"1 ID" means a welding volume in a case in which piping having a diameter of 1 inch is welded along its entire circumference. A graph FP indicates a welding volume per welder when a work is actually executed. An average value API of the welding volume per welder over the entire duration of the construction is 20 ID/welder. An average value AP2 of the welding volume per worker at a middle stage of the construction is 10 ID/welder.

For example, when the number of welders is determined while assuming that the welding volume per welder over the entire duration is 20 ID/welder, the number of welders are excessive at an early stage of the construction, and the number of welders are insufficient at the middle stage of the construction. However, an appropriate number of welders can be obtained by extracting work record information on work packages having the same work type and similar work volumes from among the plurality of pieces of work record information stored in the server apparatus 50, and calculating an average value of those values indicating the productivity for each predetermined duration.

Moreover, the work volume per worker may vary depending on a shape (size) of the construction object even when work packages have the same work type and similar work volumes. In such a case, an appropriate number of welders can be obtained by extracting work record information on work packages having the same work type, similar work volumes, and similar shapes (sizes) of work objects from among the plurality of pieces of work record information stored in the server apparatus 50, and calculating an average value of those values indicating the productivity.

The work management device, the work management method, and the recording medium according to this disclosure are not limited to those of the above-mentioned embodiment.

For example, each of the terminal apparatus 10A to 10D, the terminal apparatus 20, and the server apparatus 50 may be constructed by one apparatus physically or logically joined, or may be constructed by a plurality of apparatus physically or logically separated from one another. For example, each of the terminal apparatus 10A to 10D, the terminal apparatus 20, and the server apparatus 50 may be implemented by a plurality of computers distributed on a network as in the cloud computing.

In the above-mentioned embodiment, the three terminal apparatus (terminal apparatus 10B to 10D) are used to approve the permit to work created by the terminal apparatus 10A, but the number of terminal apparatus to be used to approve the permit to work may be one, two, or four or more. Moreover, in the above-mentioned embodiment, the description is given while focusing on one performing party, but when a plurality of performing parties exist, the terminal apparatus 10A and 20 are assigned to each of the performing parties.

In the above-mentioned embodiment, the terminal apparatus 10A is the computer different from the terminal apparatus 20, but the terminal apparatus 10A may be the same computer as the terminal apparatus 20. In this case, the terminal apparatus 20 may include the creation unit 14 in addition to the reception unit 21, the acquisition unit 22, the display control unit 23, the acquisition unit 24, the registration unit 25, the acquisition unit 26, the generation unit 27, and the output unit 28. The permit to work may differ depending on details of the work, but with the above-mentioned configuration, the permit to work corresponding to details of the work can be generated through use of the terminal apparatus 20.

The terminal apparatus 20 may store the PTW information in advance. In this case, the terminal apparatus 20 is not required to include the acquisition unit 22. The terminal apparatus 20 may store the worker information in advance. In this case, the terminal apparatus 20 is not required to include the acquisition unit 24.

In the above-mentioned embodiment, the acquisition unit 24 acquires the worker information on the worker from the QR code 30a by the user of the terminal apparatus 20 using the image pickup apparatus 207 of the terminal apparatus 20 to read the QR code 30a attached to the ID card 30 of the worker of the performing party, but the method of acquiring the worker information is not limited to this method. For example, the acquisition unit 24 may acquire the worker information by the user of the terminal apparatus 20 using a card reader to read the ID card 30.

The user of the terminal apparatus 20 may use an application for performing the work management to select a work package, and may register a worker in the selected work package. For example, the user of the terminal apparatus 20 selects a work package on the screen illustrated in FIG. 19, and the user of the terminal apparatus 20 uses the image pickup apparatus 207 of the terminal apparatus 20 to read the QR code 30a attached to the ID card 30 of the worker of the performing party under a state in which the work package is selected. As a result, the acquisition unit 24 acquires the worker information, and the registration unit 25 associates the work package ID of the selected work package and the worker information (for example, the worker ID) with each other, to thereby register the worker in the work package.

Alternatively, the user of the terminal apparatus 20 may set conditions to search for workers on the screen illustrated in FIG. 19 under a state in which the work package is selected, and may add a worker to be registered in the work package from a list of the workers matching the conditions. As a result, the registration unit 25 associates the work package ID of the selected work package and the worker information (for example, the worker ID) with each other, to thereby register the worker in the work package.

### REFERENCE SIGNS LIST

1 ··· project management system, 14 creation unit, 20 ··· terminal apparatus, 22 ··· acquisition unit, 23 ··· display control unit, 24 ··· acquisition unit (second acquisition unit), 25 ··· registration unit, 26 ··· acquisition unit (first acquisition unit), 27 ··· generation unit, 28 ··· output unit, 206 ··· output apparatus (display apparatus), MD2 ··· recording medium, P2 ··· work management program

## Claims

1. A work management device, which is configured to manage a work for performing a project of constructing a construction object, the work management device comprising:
a display control unit configured to display on a display apparatus a permit to work for a work package, which is a work unit for constructing the construction object;
a registration unit configured to register one or more workers in the work package;
a first acquisition unit configured to acquire work duration information indicating a work duration that has been required to complete the work package;
a generation unit configured to generate work record information including identification information on the work package and the work duration information; and
an output unit configured to output the work record information.

2. The work management device according to claim 1, further comprising a second acquisition unit configured to acquire worker information on a worker,
wherein the registration unit is configured to associate the worker information and the identification information with each other so as to register the one or more workers in the work package.

3. The work management device according to claim 2, wherein the second acquisition unit is configured to acquire the worker information while the display apparatus displays a screen for checking the permit to work.

4. The work management device according to any one of claims 1 to 3, wherein the work duration information includes a work start time and a work finish time of the work package, and a number of workers registered in the work package.

5. The work management device according to any one of claims 1 to 4, wherein the work duration information includes a work start time and a work finish time of each of the one or more workers.

6. The work management device according to claim 5, wherein the work duration information further includes a leave time, which is a time at which a worker leaves a work site, and a return time, which is a time at which the worker returns to the work site.

7. The work management device according to any one of claims 1 to 6, further comprising a creation unit configured to create the permit to work based on information on work details input by a user.

8. A work management method for managing a work for performing a project of constructing a construction object, the work management method comprising:
displaying on a display apparatus a permit to work for a work package, which is a work unit for constructing the construction object;
registering one or more workers in the work package;
acquiring work duration information indicating a work duration that has been required to complete the work package;
generating work record information including identification information on the work package and the work duration information; and
outputting the work record information.

9. A computer-readable recording medium having recorded thereon a work management program for causing a computer to operate to manage a work for performing a project of constructing a construction object, the work management program being a program for causing a computer to execute the procedures of:
displaying on a display apparatus a permit to work for a work package, which is a work unit for constructing the construction object;
registering one or more workers in the work package;
acquiring work duration information indicating a work duration that has been required to complete the work package;
generating work record information including identification information on the work package and the work duration information; and
outputting the work record information.
